(19) Europäisches Patentamt
European Patent Office
Office européen des brevets

(11) Veröffentlichungsnummer: **0 063 344**
**B1**

# (12) EUROPÄISCHE PATENTSCHRIFT

(45) Veröffentlichungstag der Patentschrift: **27.03.85**

(51) Int. Cl.⁴: **C 04 B 20/10**, C 04 B 28/34

(21) Anmeldenummer: **82103082.2**

(22) Anmeldetag: **10.04.82**

## (54) Formkörper aus geblähten Mineralien.

(30) Priorität: **18.04.81 DE 3115758**

(43) Veröffentlichungstag der Anmeldung: **27.10.82 Patentblatt 82/43**

(45) Bekanntmachung des Hinweises auf die Patenterteilung: **27.03.85 Patentblatt 85/13**

(84) Benannte Vertragsstaaten: **BE DE FR GB NL SE**

(56) Entgegenhaltungen:
**AT - A - 353 670**
**DE - A - 1 940 020**
**DE - B - 1 030 754**
**US - A - 3 179 524**
**US - A - 3 886 076**
**US - A - 4 175 159**
**US - A - 4 255 489**

**CHEMICAL ABSTRACTS, Band 83, Nr. 24, 15. Dezember 1975, Seite 260, Nr. 197334e, Columbus, Ohio, USA A. ZHUKOV et al.: "Effect of sodium alkylsiliconates on the properties of waterproofed perlite"**

(73) Patentinhaber: **HOECHST AKTIENGESELLSCHAFT, Postfach 80 03 20, D-6230 Frankfurt am Main 80 (DE)**

(72) Erfinder: **Eckardt, Peter, Dr., Brandenburger Weg 14, D-6238 Hofheim am Taunus (DE)**
Erfinder: **Voetz, Franz Josef, c/o HOECHST JAPAN LTD. C.P.O. Box 1256, Tokyo (JP)**

**EP 0 063 344 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Geblähte Mineralien werden hergestellt durch die Expansion von Perlit, Vermiculit, Glimmer, Ton oder anderen wasserhaltigen Mineralien bei Temperaturen von 1000 bis 1300°C. Kennzeichnend für geblähte Mineralien ist ihre im Vergleich zur äußeren Oberfläche enorm große innere Oberfläche. Im Falle des Kontaktes mit Wasser können diese Mineralien bis zum 3-fachen ihres Gewichtes an Wasser aufnehmen.

Der Einsatz loser Schüttungen aus solchen geblähten Mineralien als Dämmaterial in Hohlkammerdecken und zweischaligen Mauerwerken ist seit Jahren geübte Praxis. Dabei stört allerdings die Staubentwicklung sowie die große Hydrophilie der Materialien. Dies Hydrophilie kann durch Behandlung der geblähten Mineralien mit Silikonaten eingeschränkt werden, wie in Chem. Abstr. Bd. 83, S. 260, Nr. 197 334 e und US-A-4 175 159 beschrieben. Nachteilig ist dabei außerdem, daß die gesamte Schüttung aus der Öffnung rieselt, wenn solche Decken oder Mauern geöffnet werden müssen.

Um diesen Nachteil zu beheben, wurde versucht, geblähte Mineralien durch Bitumen, Melamin- oder Phenolformaldehydharze zu verfestigen. Diese Materialien sind jedoch entweder brennbar oder müssen in so hoher Konzentration eingesetzt werden, daß sie wirtschaftlich kaum vertretbar sind. Es ist auch bekannt, leichte geblähte Mineralien mit anorganischen Bindemitteln zu binden. Mit Zementen wie z. B. Portlandzement erhält man unter Zusatz von großen Mengen Wasser ein Perlitebeton, der nach langer Trockenzeit Dichten zwischen 600 und 1000 g/Liter aufweist.

Weiter lassen sich Perlite und Vermiculit mit Monoaluminiumphosphat binden, wie z. B. in der DE-A 2 847 807 beschrieben. Auch hier müssen sehr große Mengen Wasser zugesetzt werden, um verarbeitbare Massen zu erhalten. Außerdem muß der Binder in Mengen zwischen 95 und 105% der Trockenmasse zugemischt werden. Um den mechanischen Zusammenhalt zu verbessern, müssen Mineralfasern zugegeben werden.

Es wurde nun gefunden, daß man Formkörper aus geblähten Mineralien der oben erwähnten Art mit verbesserter Festigkeit erhält, wenn man die geblähten Mineralien zuvor hydrophobiert und dann mit einem mineralischen Bindersystem aus Aluminiumphosphat und Calciumaluminat verfestigt.

Gegenstand der Erfindung sind somit Formkörper aus geblähten Mineralien, die erhalten werden durch Verfestigung eines hydrophobierten geblähten Minerals mit 2 bis 5 Gew.-% Aluminiumphosphat, bezogen auf das geblähte Mineral und 10 bis 50 Gew.-% Calciumaluminat, bezogen auf das Aluminiumphosphat, wobei das geblähte Mineral hydrophobiert ist mit einem Organoxiloxan der Formeln

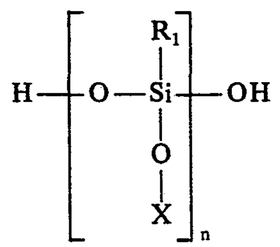

(a)

wobei $R_1$ $C_1$—$C_7$-Alkyl, vorzugsweise Methyl, $C_2$—$C_7$-Alkenyl, Phenyl oder Benzyl, X ein Alkalimetallion und n eine Zahl von 1—10 bedeuten,

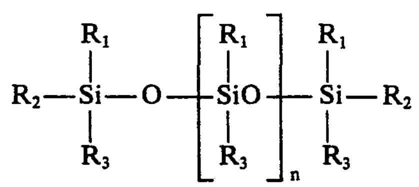

(b)

wobei $R_1$, $R_2$, $R_3$ $C_1$—$C_8$-Alkyl, vorzugsweise Methyl, $C_2$—$C_8$-Alkenyl, Phenyl, Benzyl oder Styryl und n eine Zahl von 1—1000 bedeuten,

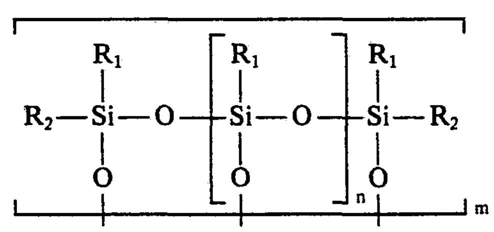

(c)

wobei $R_1$, $R_2$ $C_1-C_8$-Alkyl, vorzugsweise Methyl, $C_2-C_8$-Alkenyl, Phenyl, Benzyl oder Styryl und n eine Zahl von 1—100 und m eine Zahl von 1—100 oder

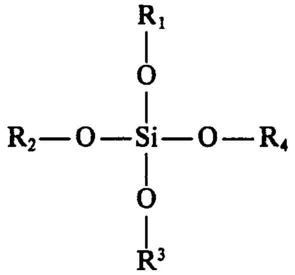

(d)

wobei $R_1$ und $R_2$ gleich oder verschieden sein können und $C_1-C_{20}$-Alkyl, $C_2-C_{18}$-Alkenyl, $C_1-C_{12}$-Alkylphenyl, $C_2-C_{18}$-Acyl oder $C_2-C_{18}$-Alkyl, das in $\omega$-Stellung durch eine Carboxyl-, Amino-, Hydroxy- oder Oxirangruppe substituiert ist und $R_3$ und $R_4$ gleich oder verschieden sein können und $C_1-C_4$-Alkyl, $C_2-C_7$-Alkenyl, Phenyl, Benzoyl oder Benzyl bedeuten.

Die Hydrophobierung der geblähten Mineralien erfolgt im allgemeinen durch Aufsprühen der Organosiloxane etwa in Form von wäßrigen, ca. 2 bis 10%igen Lösungen bei den Produkten (a) und (d). Daran anschließend wird das geblähte Mineral getrocknet. Die Organosiloxane (b) und (c) können direkt in unverdünnter Form auf das geblähte Mineral aufgesprüht werden. Die Menge an Organosiloxan bezogen auf das geblähte Mineral beträgt in allen Fällen 0,1 bis 5, vorzugsweise 0,2 bis 3,5 Gew.-%.

Zur Verfestigung des so hydrophobierten geblähten Minerals dient ein Gemisch aus Calciumaluminat und Aluminiumphosphat. Man vermischt das geblähte Mineral zunächst mit dem Calciumaluminat und gibt dann eine wäßrige Lösung von primärem Aluminiumphosphat zu. Diese Masse wird dann in die gewünschte Form gegeben, wo die Verfestigung durch Einwirkung von Druck und Wärme erfolgt. Es ist aber ebenfalls ohne weiteres möglich, das Calciumaluminat zusammen mit dem Organosiloxan auf das geblähte Mineral aufzubringen und später nur noch das Aluminiumphosphat zuzugeben.

Als Calciumaluminate kommen Tonerdezemente in Frage, die im allgemeinen aus 25—44% CaO, 35—44% $Al_2O_3$, 4—12% $Fe_2O_3$, 0—10% FeO und 3—11% $SiO_2$ bestehen. Im wesentlichen bestehen solche Tonerdezemente aus Calciumaluminaten der Formeln $CaO \cdot Al_2O_3$, $CaO \cdot 2\,Al_2O_3$ oder $CaO \cdot 7\,Al_2O_3$.

Der Anteil an Calciumaluminat beträgt 10 bis 50, vorzugsweise 30 bis 40 Gew.-%, bezogen auf das Aluminiumphosphat in fester Form. Für eine ausreichende Verfestigung der Formkörper benötigt man 2 bis 25, vorzugsweise 5 bis 15 Gew.-% festes Aluminiumphosphat, bezogen auf die hydrophobierten geblähten Mineralien. Das Aluminiumphosphat wird als ca. 40—60%ige wäßrige Lösung eingesetzt und eventuell noch weiter mit Wasser verdünnt, zu der Mischung aus hydrophobiertem geblähtem Mineral und Calciumaluminat gegeben und in einem Mischaggregat vermischt. Hierbei können noch weitere Füllstoffe wie z. B. Quarz, Aluminiumoxid, Schaumstoffe, Siliciumcarbid, Zinkoxid oder Mineralfasern sowie synthetische Fasern aus Polyester, Polyacrylnitril oder aromatischen Polyamiden eingearbeitet werden. Die Menge an Wasser wird im allgemeinen so bemessen, daß die gesamte Mischung gut feucht ist.

Nach einer Mischzeit von ca. 2 bis 10 Minuten wird die feuchte Mischung in die gewünschte Form gegeben und unter Druck verdichtet. Nach 5 bis 10 Minuten ist der Abbindevorgang bereits so weit fortgeschritten, daß der Formkörper entformt werden kann. Durch Erwärmung auf ca. 140 bis 250°C erfolgt eine weitere Verfestigung.

Zur Trocknung sind Tunnelöfen oder Wärmeschränke herkömmlicher Bauart geeignet, besonders vorteilhaft ist jedoch die Trocknung mit Mikrowellen oder in Hochfrequenztrocknern.

Als Formkörper, die auf die oben beschriebene Weise hergestellt werden können, kommen vor allem Platten in Frage, die allein oder zusammen mit Gipskartonplatten als wärme- und schalldämmende Decken- und Wandplatten eingesetzt werden. Durch Verwendung geeigneter Formen können auch Hohlkörper hergestellt werden, die sich als auslaufsicheres Verpackungsmaterial oder als Pflanztöpfe eignen, in deren Poren wegen ihrer offenporigen Struktur Düngemittel- und Pflanzenschutzmittel-Depots eingearbeitet werden können. Mit kubischen und zylindrischen Formen können Körper hergestellt werden, die in Betondecken und Betonfertigteilen als Durchbruch für Installationsanlagen eingesetzt werden. Dachpfannen und zementgebundene Dach- und Fassadenplatten können mit der oben beschriebenen Mischung beschichtet werden, die auf diese Weise eine isolierende Schicht erhalten.

## Beispiel 1

100 g Perlit wurden mit einer wäßrigen Lösung, enthaltend 10% Di-Octyldimethylsilikonat und 2% Essigsäure besprüht und thermisch kondensiert. Die Menge an Silikonat bezogen auf Perlit betrug 0,5 Gew.-%. Das so erhaltene hydrophobierte Perlit wurde dann mit 2,5 g Tonerdeschmelzzement der

Zusammensetzung 37% CaO, 40% $Al_2O_3$, 15% $FeO_3$, Rest $SiO_2$ und 16 g einer 50%igen Aluminiumphosphatlösung und weiteren 35 ml Wasser während 3 min intensiv gemischt. Die Masse wurde in einer 10 × 10 cm großen Form bei einem Druck von 50 $N/cm^2$ verdichtet und bei 160°C kondensiert. Man erhält eine Platte mit ausgezeichneter Kantenstabilität und einer Dichte von 280 g/l.

Beispiel 2

100 g Perlite wurden mit 3 g Tonerdeschmelzzement vermischt und anschließend mit 2% Natriummethylsilikonat in Form einer 10%igen, wäßrigen Lösung durch Besprühen hydrophobiert. Nach dem Trocknen versetzte man die Mischung mit 16 g einer 50% Aluminiumphosphatlösung und 20 ml Wasser und behandelte die Platte wie in Beispiel 1 beschrieben. Man erhielt eine Platte mit einer Dichte von 360 g/l und hervorragender Kantenstabilität.

**Patentansprüche**

1. Formkörper aus geblähten Mineralien, dadurch gekennzeichnet, daß sie erhalten werden durch Verfestigung eines hydrophobierten geblähten Minerals mit 2 bis 25 Gew.-% Aluminiumphosphat, bezogen auf das geblähte Mineral und 10 bis 50 Gew.-% Calciumaluminat, bezogen auf das Aluminiumphosphat, wobei das geblähte Mineral hydrophobiert ist mit einem Organoxiloxan der Formeln

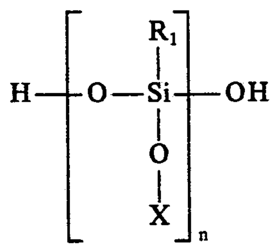

(a)

wobei $R_1$ $C_1-C_7$-Alkyl, vorzugsweise Methyl, $C_2-C_7$-Alkenyl, Phenyl oder Benzyl, X ein Alkalimetallion und n eine Zahl von 1—10 bedeuten,

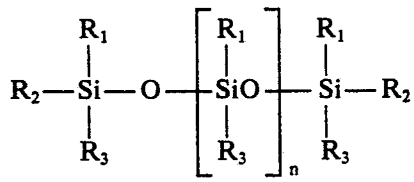

(b)

wobei $R_1$, $R_2$, $R_3$ $C_1-C_8$-Alkyl, vorzugsweise Methyl, $C_2-C_8$-Alkenyl, Phenyl, Benzyl oder Styryl und n eine Zahl von 1—1000 bedeuten,

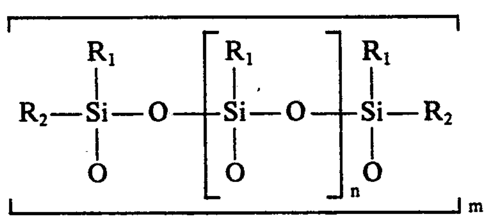

(c)

wobei $R_1$, $R_2$ $C_1-C_8$-Alkyl, vorzugsweise Methyl, $C_2-C_8$-Alkenyl, Phenyl, Benzyl oder Styryl und n eine Zahl von 1—100 und m eine Zahl von 1—100 oder

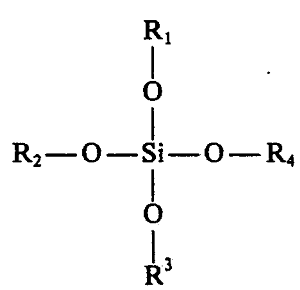

(d)

wobei $R_1$ und $R_2$ gleich oder verschieden sein können und $C_1-C_{20}$-Alkyl, $C_2-C_{18}$-Alkenyl, $C_1-C_{12}$-Alkylphenyl, $C_2-C_{18}$-Acyl oder $C_2-C_{18}$-Alkyl, das in $\omega$-Stellung durch eine Carboxyl-, Amino-, Hydroxy- oder Oxirangruppe substituiert ist und $R_3$ und $R_4$ gleich oder verschieden sein können und $C_1-C_4$-Alkyl, $C_2-C_7$-Alkenyl, Phenyl, Benzoyl oder Benzyl bedeuten.

2. Formkörper nach Anspruch 1, dadurch gekennzeichnet, daß sie erhalten werden durch Verfestigung eines geblähten Minerals, das hydrophobiert ist mit einem Organosiloxan der Formeln (a), (b) oder (c) worin jeweils $R_1$ Methyl bedeutet.

3. Formkörper nach Anspruch 1, dadurch gekennzeichnet, daß sie erhalten werden durch Verfestigung eines geblähten Minerals, das mit 0,1 bis 5 Gew.-% des Organosiloxans hydrophobiert ist.

**Claims**

1. Shaped articles made from expanded minerals which are characterized in that they are obtained by consolidating an expanded mineral with 2 to 25% by weight of aluminium phosphate, relative to the expanded mineral and 10 to 50% by weight of calcium aliuminate relative to the aluminium phosphate, which expanded mineral is rendered hydrophobic by means of an organosiloxane of the formulae

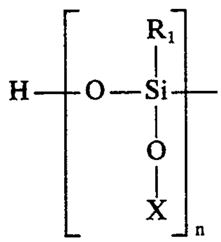

(a)

in which $R_1$ denotes $C_1-C_7$-alkyl, preferably methyl, $C_2-C_7$-alkenyl, phenyl or benzyl, X denotes an alkali metal ion and n denotes a number from 1 to 10,

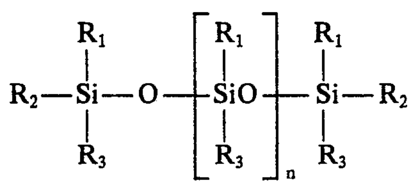

(b)

in which $R_1$, $R_2$ and $R_3$ denote $C_1-C_8$-alkyl, preferably methyl, $C_2-C_8$-alkenyl, phenyl, benzyl or styryl and n denotes a number from 1 to 1000,

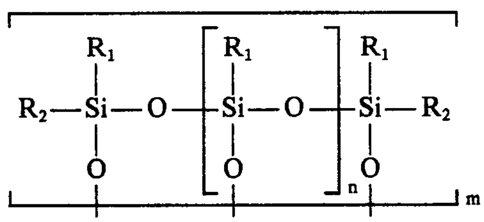

(c)

in which $R_1$ and $R_2$ denote $C_1-C_8$-alkyl, preferably methyl, $C_2-C_8$-alkenyl, phenyl, benzyl or styryl and n denotes a number from 1 to 100 and m denotes a number from 1 to 100 or

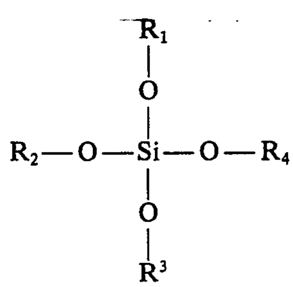

(d)

in which $R_1$ and $R_2$ can be identical or different and denote $C_1-C_{20}$-alkyl, $C_2-C_{18}$-alkenyl, $C_1-C_{12}$-alkylphenyl, $C_2-C_{18}$-acyl or $C_2-C_{18}$-alkyl which is substituted in the $\omega$-position by a carboxyl, amino, hydroxyl or oxirane group and $R_3$ and $R_4$ can be identical or different and denote $C_1-C_4$-alkyl, $C_2-C_7$-alkenyl, phenyl, benzoyl or benzyl.

2. Shaped articles as claimed in claim 1, obtained by consolidation of an expanded mineral which has been rendered hydrophobic by means of an organosiloxane of the formulae a), b) or c) in which $R_1$ denotes methyl in each case.

3. Shaped articles as claimed in claim 1, obtained by consolidation of an expanded mineral which has been rendered hydrophobic by means of 0,1 to 5% by weight of the organosiloxane.

**Revendications**

1. Objets moulés en des minéraux expansés, caractérisés en ce qu'on les obtient en soumettant un minerai expansé, rendu hydrophobe, à une consolidation à l'aide de 2 à 25% en poids de phosphate d'aluminium, par rapport au minerai expansé, et 10 à 50% en poids d'aluminate de calcium, par rapport au phosphate d'aluminium, le minerai expansé ayant été rendu hydrophobe à l'aide d'un organosiloxane répondant aux formules:

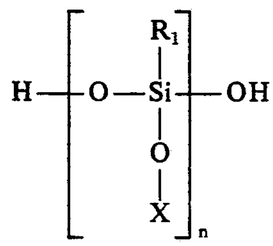

(a)

(dans laquelle $R_1$ représente un groupe alkyle en $C_1$ à $C_7$, de préférence méthyle, alcényle en $C_2$ à $C_7$, phényle ou benzyle; X est un ion de métal alcalin et n est un nombre valant 1 à 10),

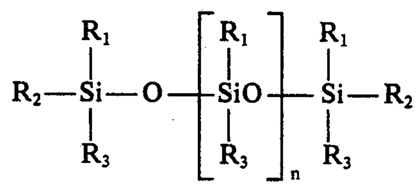

(b)

(dans laquelle $R_1$, $R_2$ et $R_3$ représentent un groupe alkyle en $C_1$ à $C_8$, de préférence méthyle, alcényle en $C_2$ à $C_8$, phényle, benzyle ou styryle, et n est un nombre valant 1 à 1000),

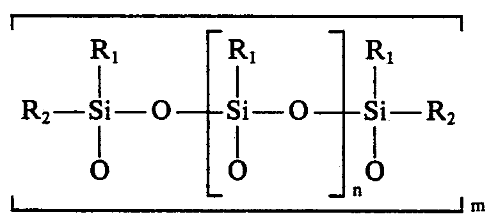

(c)

(dans laquelle $R_1$ et $R_2$ représentent un groupe alkyle en $C_1$ à $C_8$, de préférence méthyle, alcényle en $C_2$ à $C_8$, phényle, benzyle ou styryle, et n est un nombre valant 1 à 100, et m est un nombre valant 1 à 100) ou

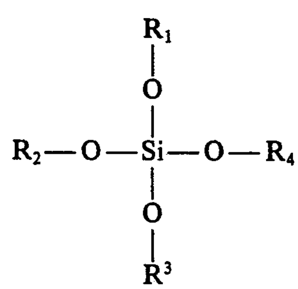

(d)

(dans laquelle $R_1$ et $R_2$ peuvent être identiques ou différents et représentent chacun un groupe alkyle en $C_1$ à $C_{20}$, alcényle en $C_2$ à $C_{18}$, alkylphényle en $C_1$ à $C_{12}$, acyle en $C_2$ à $C_{18}$ ou alkyle en $C_2$ à $C_{18}$, lequel est substitué en position terminale ou oméga par un groupe carboxyle, amino, hydroxyle ou oxirane, et $R_3$ et $R_4$ peuvent être identiques ou différents et représentent chacun un groupe alkyle en $C_1$ à $C_4$, alcényle en $C_2$ à $C_7$, phényle, benzoyle ou benzyle).

2. Objets moulés selon la revendication 1, caractérisés en ce qu'ils ont été obtenus par consolidation d'un minerai expansé, qui est rendu hydrophobe à l'aide d'un organosiloxane répondant à l'une des formules a), b) ou c), dans lesquelles $R_1$ représente à chaque fois un groupe méthyle.

3. Objets moulés selon la revendication 1, caractérisés en ce qu'ils ont été obtenus par consolidation d'un minerai expansé qui a été rendu hydrophobe à l'aide de 0,1 à 5% en poids de l'organosiloxane.